# EUROPÄISCHE PATENTSCHRIFT

(11) **EP 0 691 377 B1**
(45) Veröffentlichungstag und Bekanntmachung des Hinweises auf die Patenterteilung: **01.04.1998**
(21) Anmeldenummer: 95107721.3
(22) Anmeldetag: 20.05.1995
(51) Int. Cl.: C08L 61/06, C08G 8/10

(54) **Flüssige Bindemittel**
Liquid binder
Liant liquide

(30) Priorität: 07.07.1994 DE 4423913
(43) Veröffentlichungstag der Anmeldung: 10.01.1996
(73) Patentinhaber: Bakelite AG, 58642 Iserlohn-Letmathe (DE)
(72) Erfinder: Hansen, Achim, Dr., D-58642 Iserlohn (DE); König, Michal, D-58642 Iserlohn (DE); Schröter, Stephan, D-45139 Essen (DE); Suren, Josef, D-33181 Haaren (DE)

(56) Entgegenhaltungen:
- WO-A-93/03086
- DE-A- 3 022 534

## Beschreibung

Die Erfindung betrifft flüssige Bindemittel auf Phenolharzbasis, Verdünnungsmitteln und ggf. Härtungsmittel. Flüssige Bindemittel auf Basis Phenolharz werden vorwiegend als Benetzungs- und Imprägnierharze benötigt und zwar sowohl bei der Herstellung von Laminaten, Isolier- oder Schleifmaterialien als auch in der Gießerei- und Feuerfestindustrie. Zusätzlich finden sie Verwendung im Lackbereich, für Beschichtungen und im Säurebau. Eingesetzt werden bislang vorwiegend Lösungen von Novolaken bzw. Resolen und Kombinationen in organischen Lösemitteln, teilweise in Kombination mit Wasser, wobei der Wunsch besteht, den Einsatz von organischen Lösemitteln zu reduzieren bzw. zu vermeiden, oder als wäßrige Lösungen von Resolen. Abgesehen davon, daß Resollösungen nicht lagerstabil sind, muß das Wasser aus diesen Lösungen nach der Imprägnierung oder Benetzung mit den Resollösungen abgedampft werden. Dies ist ein unerwünschter Arbeitsgang. Bei der Aushärtung der Resole entsteht Wasser, das ebenfalls unerwünscht ist.

Aus EP-A 0 248 980 sind stabile Novolake bekannt, die bei Temperaturen im Bereich von Raumtemperatur bis 50 °C flüssig sind. Jedoch sind die Schmelzviskositäten dieser Phenolharze für viele Anwendungszwecke noch zu hoch, so daß man den Imprägnier- oder Benetzungsvorgang bei erhöhter Temperatur durchführen muß.

Gemäß DE-A 30 22 534 werden daher Novolake und Härter nicht in Lösungsmitteln sondern in Reaktivverdünnern gelöst, die bei der Härtung mitvernetzen. Als Reaktivverdünner dienen furanhaltige Verbindungen, die dem neutralisierten Novolakharz zugegeben werden. Die erhaltenen Lösungen sind jedoch sehr pH-labil. Sie sind nicht lagerfähig.

Nach DE-A 41 26 059 dienen Phenol und Alkylphenole als Reaktivverdünner für Novolake. Um eine ausreichende Viskosität zu erhalten, müssen die entsprechenden Lösungen etwa 50 % Phenol enthalten. Durch diesen extrem hohen Phenolgehalt entstehen Arbeitsschutz- und Emissionsprobleme sowie eine Erniedrigung der Festigkeitswerte der ausgehärteten Bindemittel.

Versuche, den Gehalt an Verdünnungsmittel dadurch zu reduzieren, daß als Phenolharze die aus EP-A 0 248 980 bekannten niedermolekularen, flüssigen Novolake eingesetzt werden, scheitern, da nach kurzer Lagerzeit aus derartigen Lösungen Festsubstanzen auskristallisieren. D.h., Lösungen von Novolaken mit molaren Phenol-Formaldehydverhältnissen von 1:0,1-0,5 Phenol sind nicht lagerstabil.

Es ist daher Aufgabe der Erfindung, ein flüssiges Bindemittel mit hohem Feststoffgehalt auf Basis von Phenolharz bereitzustellen, mit einer Viskosität, die auch bei Raumtemperatur ein gutes Benetzen und leichtes Imprägnieren von Substraten ermöglicht, das auch bei mehrmonatiger Lagerung ohne Auskristallisationen oder Viskositätsänderungen lagerfähig ist und dessen Gehalt an freiem Phenol unter 25 Gew.-% liegt.

Die Lösung der Aufgabe erfolgt durch Bindemittel aus Phenolharz, Verdünnungsmittel und ggf. Härtungsmittel gemäß den Ansprüchen 1-5, sowie durch Verfahren zu ihrer Herstellung gemäß den Ansprüchen 6-10.

Es wurde gefunden, daß sich stabile niedrigviskose Lösungen aus Phenolharz, Reaktivverdünner und Härtungsmittel herstellen lassen, wenn als Phenolharz ein solches eingesetzt wird, das durch alkalisch katalysierte Kondensation eines Phenols und Formaldehyd hergestellt ist, wobei das molare Verhältnis von eingesetzter phenolischer Verbindung zu Formaldehyd im Bereich von 1:0,05-1, bevorzugt im Bereich von 1:0,1-0,5 und insbesondere von 1:0,2-0,4 liegt.

Das Phenolharz ist soweit kondensiert, daß nur noch 0,2-10 %, insbesondere 2-5 % des eingesetzten Formaldehyds in Form von Methylolgruppen vorliegen. 90-99,8 %, insbesondere 95-98 % der bei der Reaktion der phenolischen Verbindung mit Formaldehyd entstandenen Methylolgruppen sind in Methylengruppen umgewandelt, die Phenolkerne miteinander verknüpfen.

Als Verdünnungsmittel können alle üblichen bekannten Lösemittel wie z.B. Alkohole, Ester, Glycole, Ether, Carbonate, Aromaten usw. sowie Reaktivverdünner und Wasser eingesetzt werden. Möglich sind auch Kombinationen.

Als Reaktivverdünner dienen Phenol oder Alkylphenole mit Alkylgruppen bis zu 10 C-Atomen, ferner furanhaltige Verbindungen, insbesondere Furfurylalkohol, aber auch aus der Epoxidharzchemie als Reaktivverdünner bekannte niedrigviskose Glycidylverbindungen. Ihre Menge liegt im Bereich von 1-25 Gew.-% des Gesamtbindemittels, bevorzugt im Bereich von 5-10 Gew.-%. Der bevorzugte Reaktivverdünner ist Phenol.

Härtungsmittel sind in der Wärme Formaldehyd freisetzende Verbindungen wie z.B. Trioxan, Paraformaldehyd oder insbesondere Hexamethylentetramin, aber auch Resole, Melamin- oder Harnstoffe, Epoxidharze oder Isocyanate. Sie werden üblicherweise in Mengen von 1-15 Gew.-%, bezogen auf das Gesamtbindemittel, eingesetzt. Werden als Reaktivverdünner Diglycidylverbindungen eingesetzt, so dienen diese dann gleichzeitig auch als Härtungsmittel, wobei der Mischung dann allenfalls ein an sich bekannter latenter Härtungskatalysator, etwa ein Imidazolderivat, ein Ketimin oder eine Komplexverbindung gemäß der allgemeinen Formal Me^{x+} (Chelat),(Anion) (x-y) in an sich bekannten Mengen zugegeben wird.

Je nach Anwendungsgebiet werden die erfindungsgemäßen Bindemittel entweder direkt als Imprägnierharze (Laminatherstellung) oder als Benetzungsharze (Mineralfaserdämmstoffe, Textilvlies, Holzwerkstoffe) eingesetzt oder in bekannter Weise mit beliebigen Füll- und/oder Zusatzstoffen, ggf. auch in Kombination mit weiteren Extendern oder Bindemitteln wie z.B. Novolak-Pulverharzen, Kautschuken, Thermoplasten, Epoxidharzen oder Polyestern, gemischt und diese Mischungen nach Formgebung bei Raumtemperatur (katalytisch) oder erhöhter Temperatur (80-160° C) gehärtet.

Die erfindungsgemäßen Bindemittel eignen sich auch als Harze für Lacke und Klebstoffe und für den Säurebau.

Die Herstellung der erfindungsgemäßen Bindemittel erfolgt in der Weise, daß die speziellen Phenolharze mit Reaktivverdünner und Härtungsmittel vermischt werden. Dazu werden die Phenolharze durch an sich bekannte Kondensation von phenolischen Verbindungen mit Formaldehyd oder einer unter Reaktionsbedingungen Formaldehyd abspaltenden Substanz, d.h. durch die thermische Behandlung einer wäßrigen alkalischen Mischung aus phenolischer Verbindung und Formaldehyd (vergl. Knop, Pilato; Phenolic Resins, Springer-Verlag 1985, S. 95 ff) hergestellt, wobei das spezielle, für Resole untypische molare Verhältnis von phenolischer Verbindung zu Formaldehyd von 1:0,05-1, insbesondere von 1:0,1-0,5, bevorzugt von 1:0,2-0,4 vorgelegt wird. In einer ersten Reaktionsstufe werden dabei Methylolphenole gebildet, die bei weiterer thermischer Behandlung unter Bildung von Dimethylether- bzw. Methylenbrücken miteinander und mit freier phenolischer Verbindung kondensieren. Dabei wird die thermische Behandlung so lange durchgeführt, bis mehr als 90 % des eingesetzten Formaldehyds, insbesondere 90-99,8 %, bevorzugt 95-98 % des Formaldehyds als Methylen- und/oder Dimethyletherbrücken vorliegen. Danach wird Wasser und nicht umgesetzte phenolische Verbindung abdestilliert und das Phenolharz mit Reaktivverdünner und Härtungsmittel vermischt. Ist der Reaktivverdünner identisch mit der in der Kondensationsreaktion verwendeten phenolischen Verbindung, so kann der letzte Schritt insofern vereinfacht werden, als die phenolische Verbindung nur bis zum gewünschten Restphenolgehalt aus dem Harz abdestilliert wird. Als phenolische Verbindung können ein- oder mehrkernige Phenole oder Gemische der genannten Verbindungsklassen eingesetzt werden. Beispiele hierfür sind das Phenol selbst, sowie dessen alkyl- substituierte Homologe, wie o-, m- oder p-Kresol oder höher alkylierte Phenole (mit Alkylketten bis zu 10 C-Atomen), außerdem halogensubstituierte Phenole wie Chlor- oder Bromphenol, Bisphenol A und mehrwertige Phenole wie Resorcin oder Brenzkatechin.

### BEISPIELE

### Beispiel 1

94 kg Phenol werden mit 1,8 kg N,N-Dimethylbenzylamin versetzt und auf ca. 100 °C erhitzt. Unter Rühren und Rückfluß werden über 3 Stunden verteilt 13,3 kg 45 %iges Formalin zugegeben. (Phenol-Formaldehyd-Verhältnis 1 : 0,2). Nach Beendigung der Zugabe wird die Reaktionsmischung bis zu einem freien Formalingehalt <0,5 % unter Rückfluß erhitzt und anschließend Phenol und Wasser abdestilliert, bis ein Gehalt an freiem Phenol <1 % erreicht wird. Danach wird durch Zugabe von "Lösungsmitteln" auf eine Viskosität bei 20 °C von ca. 2.000 mPa.s eingestellt.
a) Ethylenglykol
b) Furfurylalkohol
c) Ethylenglycol und Wasser
d) Furfurylalkohol und Wasser
e) Phenol

### Beispiel 2

Analog Beispiel 1, jedoch wird nach der Kondensationsreaktion auf einen Phenolgehalt von 5 - 10 % destilliert. Anschließend wird durch Zugabe von Lösungsmitteln auf eine Viskosität bei 20 °C von ca. 2.000 mPa.s eingestellt.
a) Ethylenglykol
b) Furfurylalkohol
c) Ethylenglykol und Wasser
d) Furfurylalkohol und Wasser
e) Wasser

### Beispiel 3

Wie Beispiel 1, mit einem Molverhältnis Phenol : Formaldyhad von 1 : 0,25 (94 kg Phenol: 16,7 kg Formalin 45 %ig).

### Beispiel 4

Wie Beispiel 2, mit einem Molverhältnis Phenol : Formaldehyd von 1 : 0,3 (94 kg Phenol : 20 kg Formalin 45 %ig).

### Beispiel 5

Wie Beispiel 2, mit einem Molverhältnis Phenol : Formaldehyd von 1 : 0,35 (94 kg Phenol : 23,3 kg Formalin 45 %ig).

### Vergleichsbeispiel

94 kg Phenol werden mit 940 g Oxalsäure versetzt und auf ca. 100 °C erhitzt. Unter Rühren und Rückfluß werden über 3 Stunden verteilt 13,3 kg 45 %iges Formalin zugegeben. Nach Beendigung der Zugabe wird die Reaktionsmischung bis zu einem freien Formalingehalt <0,5 % unter Rückfluß erhitzt und anschließend Phenol und Wasser abdestilliert, bis ein Gehalt an freiem Phenol <0,5 % erreicht wird. Dann wird durch Zugabe von "Lösungsmitteln" auf eine Viskosität bei 20 °C von ca. 2.000 mPa.s eingestellt.
a) Ethylenglykol
b) Furfurylalkohol
c) Ethylenglycol und Wasser
d) Furfurylalkohol und Wasser
e) Phenol

### Ergebnisse

Die so hergestellten Lösungen werden bei unterschiedlichen Temperaturen jeweils 4 Wochen lang gelagert und danach auf Beständigkeit untersucht. Die Resultate sind in der nachfolgenden Tabelle aufgeführt:

| **Lagerung** | | **5°C/4 Wochen** | **25 °C/4 Wochen** | **45 °C Wochen** |
|---|---|---|---|---|
| **Beispiele** 1,2,3,4,5 jeweils | a | Lösung klar | Lösung klar | Lösung klar |
| | b | Lösung klar | Lösung klar | Lösung klar |
| | c | Lösung klar | Lösung klar | Lösung klar |
| | d | Lösung klar | Lösung klar | Lösung klar |
| | e | Lösung klar | Lösung klar | Lösung klar |

| **Lagerung** | | **5°C/4 Wochen** | **25 °C/4Wochen** | **45°C/4 Wochen** |
|---|---|---|---|---|
| Vergleichsbeispiel | a | Produkt fällt aus | Produkt fällt aus | Produkt fällt aus |
| | b | Produkt fällt aus | Produkt fällt aus | Produkt fällt aus |
| | c | Produkt fällt aus | Produkt fällt aus | Produkt fällt aus |
| | d | Produkt fällt aus | Produkt fällt aus | Produkt fällt aus |
| | e | Produkt fällt aus | Produkt fällt aus | Produkt fällt aus |

## Patentansprüche

1. Flüssige Bindemittel aus Phenolharz, Verdünnungs- und Härtungsmittel, **dadurch gekennzeichnet**, daß das Phenolharz hergestellt ist durch alkalisch katalysierte Kondensation eines Phenols und Formaldehyd, wobei das molare Verhältnis von eingesetzter phenolischer Verbindung zu Formaldehyd im Bereich von 1:0,05-1 liegt.

2. Bindemittel nach Anspruch 1, **dadurch gekennzeichnet**, daß das molare Verhältnis von eingesetzter phenolischer Verbindung zu Formaldehyd im Bereich von 1:0,1-0,5 liegt.

3. Bindemittel nach Anspruch 1, **dadurch gekennzeichnet**, daß das molare Verhältnis von eingesetzter phenolischer Verbindung zu Formaldehyd im Bereich von 1:0,2-0,4 liegt.

4. Bindemittel nach Anspruch 1, **dadurch gekennzeichnet**, daß das Phenolharz soweit kondensiert ist, daß nur noch 0,2-10 % des eingesetzten Formaldehyds in Form von Methylolgruppen vorliegen.

5. Bindemittel nach Anspruch 1, **dadurch gekennzeichnet**, daß das Phenolharz soweit kondensiert ist, daß nur noch 2-5 % des eingesetzten Formaldehyds in Form von Methylolgruppen vorliegen.

6. Verfahren zur Herstellung von Bindemitteln gemäß Anspruch 1, **dadurch gekennzeichnet**, daß eine phenolische Verbindung und Formaldehyd im molaren Verhältnis von 1:0,05-1 unter alkalischen Bedingungen so lange kondensiert werden, bis mehr als 90 % des eingesetzten Formaldehyds als Methylen- und/oder Dimethyletherbrücken vorliegen, danach Wasser und nicht umgesetzte phenolische Verbindung abdestilliert und das Phenolharz mit Reaktivverdünner und Härtungsmittel vermischt wird.

7. Verfahren nach Anspruch 6, **dadurch gekennzeichnet**, daß phenolische Verbindung und Formaldehyd im molaren Verhältnis von 1:0,1-0,5 eingesetzt werden.

8. Verfahren nach Anspruch 6, **dadurch gekennzeichnet**, daß phenolische Verbindung und Formaldehyd im molaren Verhältnis von 1:0,2-0,4 eingesetzt werden.

9. Verfahren nach Anspruch 6, **dadurch gekennzeichnet**, daß die Kondensation so lange durchgeführt wird, bis 90-99,8 % des eingesetzten Formaldehyds als Methylenbrücken vorliegen.

10. Verfahren nach Anspruch 6, **dadurch gekennzeichnet**, daß die Kondensation so lange durchgeführt wird, bis 95-98 % des eingesetzten Formaldehyds als Methylen- und/oder Dimethyletherbrücken vorliegen.

## Claims

1. A liquid binder consisting of phenol resin, diluent and hardener, **characterized in that** the phenol resin is produced by the alkali-catalysed condensation of a phenol and formaldehyde, wherein the molar ratio of the phenol compound to formaldehyde is in the range of 1 : 0.05 - 1.

2. A binder according to Claim 1, **characterized in that** the molar ratio of the phenol compound to formaldehyde is in the range of 1 : 0·1 - 0·5.

3. A binder according to Claim 1, **characterized in that** the molar ratio of the phenol compound to formaldehyde is in the range of 1 : 0·2 - 0·4.

4. A binder according to Claim 1, characterized in that the phenol resin is condensed to such a degree that only 0·2 - 10% of the formaldehyde is present in the form of methylol groups.

5. A binder according to Claim 1, **characterized in that** the phenol resin is condensed to such a degree that only 2 - 5% of the formaldehyde is present in the form of methylol groups.

6. A method of preparing binders according to Claim 1, **characterized in that** a phenol compound and formaldehyde in a molar ratio of 1 : 0·05 - 1 under alkaline conditions are condensed until more than 90% of the formaldehyde is present in the form of methylene and/or dimethyl ether bridges, then water and unreacted phenol compound are distilled off and the phenol resin is mixed with reactive diluent and hardener.

7. A method according to Claim 6, **characterized in that** the phenol compound and formaldehyde are used in a molar ratio of 1 : 0·1 - 0·5.

8. A method according to Claim 6, **characterized in that** the phenol compound and formaldehyde are used in a molar ratio of 1 : 0·2 - 0·4.

9. A method according to Claim 6, **characterized in that** the condensation is performed until 90 - 99·8% of the formaldehyde is present in the form of methylene bridges.

10. A method according to Claim 6, **characterized in that** the condensation is performed until 95 - 98% of the formaldehyde is present in the form of methylene and/or dimethyl ether bridges.

## Revendications

1. Liant liquide à partir de résine phénolique, d'un agent diluant et d'un agent durcissant, caractérisé en ce que la résine phénolique est préparée par condensation catalysée par voie alcaline d'un phénol et d'un formaldéhyde, le rapport molaire entre le composé phénolique utilisé et le formaldéhyde se situant dans la plage de 1:0,05-1.

2. Liant selon la revendication 1, caractérisé en ce que le rapport molaire entre le composé phénolique utilisé et le formaldéhyde se situe dans la plage de 1:0,1-0,5.

3. Liant selon la revendication 1, caractérisé en ce que le rapport molaire entre le composé phénolique utilisé et le formaldéhyde se situe dans la plage de 1:0,2-0,4.

4. Liant selon la revendication 1, caractérisé en ce que la résine phénolique est condensée dans des proportions telles que seuls 0,2-10 % du formaldéhyde utilisé se présentent encore sous forme de groupes méthylol.

5. Liant selon la revendication 1, caractérisé en ce que la résine phénolique est condensée dans des proportions telles que seuls 2-5 % du formaldéhyde utilisé se présentent encore sous forme de groupes méthylol.

6. Procédé pour la préparation de liant selon la revendication 1, caractérisé en ce qu'un composé phénolique et un formaldéhyde dans un rapport molaire de 1:0,05-1 sont condensés dans des conditions alcalines jusqu'à ce qu'il soit produit plus de 90 % du formaldéhyde utilisé sous forme de ponts méthylène et/ou diméthyléther, après quoi l'eau et le composé phénolique n'ayant pas réagi sont chassés par distillation et la résine phénolique est mélangée avec le diluant réactif et l'agent durcisseur.

7. Procédé selon la revendication 6, caractérisé en ce que le composé phénolique et le formaldéhyde sont utilisés dans un rapport molaire de 1:0,1-0,5.

8. Procédé selon la revendication 6, caractérisé en ce que le composé phénolique et le formaldéhyde sont utilisés dans un rapport molaire de 1:0,2-0,4.

9. Procédé selon la revendication 6, caractérisé en ce que la condensation est conduite jusqu'à ce que 90-99,8 % du formaldéhyde utilisé se présentent sous forme de ponts méthylène.

10. Procédé selon la revendication 6, caractérisé en ce que la condensation est conduite jusqu'à ce que 95-98 % du formaldéhyde utilisé se présentent sous forme de ponts méthylène et/ou diméthyléther.
